# EUROPÄISCHE PATENTSCHRIFT

(11) **EP 3 211 700 B1**
(45) Veröffentlichungstag und Bekanntmachung des Hinweises auf die Patenterteilung: **09.05.2018**
(21) Anmeldenummer: 16157879.4
(22) Anmeldetag: 29.02.2016
(51) Int. Cl.: H01M 8/04089, H01M 8/04223, H01M 8/0444, H01M 8/04664, H01M 8/04746, H01M 8/249

(54) **BRENNSTOFFZELLENANLAGE MIT LECKAGEDETEKTION**
FUEL CELL SYSTEM WITH LEAKAGE DETECTION
INSTALLATION DE PILE A COMBUSTIBLE DOTEE D'UNE DETECTION DE FUITE

(43) Veröffentlichungstag der Anmeldung: 30.08.2017
(73) Patentinhaber: Siemens Aktiengesellschaft, 80333 München (DE)
(72) Erfinder: Brandt, Torsten, 91301 Forchheim (DE); Braunecker, Michael, 90491 Nürnberg (DE); Hoffmann, Joachim, 90559 Burgthann (DE); Lochner, Torsten, 91315 Höchstadt (DE); Mattejat, Arno, 91056 Erlangen (DE); Stühler, Walter, 96114 Hirschaid (DE)

(56) Entgegenhaltungen:
- EP-A2- 0 827 226
- DE-A1-102007 040 836
- US-A1- 2015 357 661

## Beschreibung

Die Erfindung betrifft eine Brennstoffzellenanlage mit mehreren Brennstoffzellenmodulen, die mit den Reaktanden Wasserstoff und Sauerstoff betrieben werden. Die Brennstoffzellenmodule können aus einzelnen oder mehreren Brennstoffzellen (Brennstoffzellenstapel) bestehen.

Aus der WO2015024785 (A1) ist ein aus einer Anzahl von Brennstoffzellen bestehender Brennstoffzellenstapel bekannt, der einen Wasserstoff-Einlass und -auslass sowie einen Sauerstoff-Einlass und -auslass aufweist. Der Brennstoffzellenstapel ist über seinen Wasserstoff-Einlass und -auslass in einen Wasserstoff-Kreislauf geschaltet, in den über ein Versorgungsventil Wasserstoff einleitbar und über ein Entsorgungsventil ausleitbar ist. Mit seinem Sauerstoff-Ein- und -Auslass ist der Brennstoffzellenstapel ferner in einen Sauerstoff-Kreislauf geschaltet, in den über ein weiteres Versorgungsventil Sauerstoff einleitbar und über ein weiteres Entsorgungsventil ausleitbar ist. Der Wasserstoff-Kreislauf und der Sauerstoff-Kreislauf enthalten jeweils eine Zirkulationspumpe mit einer zugeordneten Pumpensteuerung, um den sauerstoffseitigen und den wasserstoffseitigen Zirkulationsbetrieb unabhängig voneinander zu steuern oder zu regeln. Der Zirkulationsbetrieb kann insbesondere auf mehrere parallel versorgte Brennstoffzellen des Brennstoffzellenstapels angewandt werden.

Aus der DE102007040836 (A1) ist eine kaskadiert aufgebaute Brennstoffzellenanlage mit mehreren Brennstoffzellen und/oder Gruppen von Brennstoffzellen bekannt, wobei jede der Brennstoffzellen einen ersten Gasraum für ein erstes Prozessgas mit einem ersten Reaktanden, insbesondere Wasserstoff, und einen zweiten Gasraum für ein zweites Prozessgas mit einem zweiten Reaktanden, insbesondere Sauerstoff, aufweist, zwischen denen ein ionendurchlässiger Elektrolyt, insbesondere eine Polymer-Elektrolyt-Membran (PEM), angeordnet ist. Bildet sich in der Membran ein Leck, so kommt es zu einem Gasaustausch und somit zu einer direkten thermischen Umsetzung der Reaktanden Wasserstoff und Sauerstoff. Um im Falle eines Lecks in der Membran einer Brennstoffzelle diese vor Folgeschäden zu schützen und das Wasserstoff-Sauerstoff-Gasgemisch von den nachfolgenden Brennstoffzellen bzw. Brennstoffzellengruppen fernzuhalten und so auch diese zu schützen, sind in den Leitungsverbindungen zwischen den Brennstoffzellen oder Brennstoffzellengruppen, also an ihren Wasserstoff-Auslässen jeweils Sauerstoffsensoren angeordnet. Bei Überschreitung eines vorgegebenen Grenzwertes für den Sauerstoffanteil werden die Wasserstoff- und Sauerstoffzufuhr in die erste Brennstoffzellengruppe und somit für die gesamte Brennstoffzellenanlage unterbrochen.

Alternativ zur Sauerstoffdetektion kann das Wasserstoff-Sauerstoff-Gasgemisch katalytisch umgesetzt werden. Dabei wird zum einen das Gasgemisch vernichtet, was nachfolgende Zellen besonders sicher vor thermischen Schäden bewahrt; zum anderen kann das Gasgemisch aufgrund der entstehenden Reaktionswärme durch Temperaturmessung detektiert werden. Wenn die Brennstoffzellenanlage weiter betrieben wird, verbleibt jedoch das Problem, dass die fehlerhafte Brennstoffzelle im Bereich des Lecks elektrochemisch nicht mehr arbeitet und die Brennstoffzellenspannung absinkt.

Aus der JPH06223850 (A) ist eine mit Wasserstoff und Sauerstoff arbeitende PEM-Brennstoffzelle bekannt, bei der im Sauerstoff-Auslass ein Wasserstoffdetektor angeordnet ist. Im Detektionsfall erzeugt der Wasserstoffdetektor ein Signal, mit dem über ein steuerbares Auf-/Zu-Ventil die Wasserstoffzufuhr für die Brennstoffzelle unterbunden wird.

Aus der JP4923426 (B) ist eine mit Wasserstoff und Sauerstoff arbeitende Brennstoffzelle bekannt, bei der der Wasserstoff in einem Kreislauf geführt wird. Eine Steuereinheit erhält Messwerte der elektrischen Spannung, Temperatur, Eingangsdrücke sowie der Wasserstoffkonzentration im Sauerstoff-Auslass der Brennstoffzelle und steuert über die Ventile die Druckdifferenz zwischen Anoden- und Kathodenseite, so dass die Wasserstoffkonzentration im Sauerstoff-Auslass unter einem ersten Schwellenwert bleibt. Wird ein zweiter Schwellenwert erreicht, so wird ein Alarm erzeugt. Bei Erreichen eines dritten Schwellenwertes wird schließlich die Brennstoffzelle abgeschaltet.

Die US2004018404 (A1) offenbart eine mit Wasserstoff und Luft arbeitende Brennstoffzelle. Eine Steuereinheit erhält als Messwerte den Druck des zugeführten Wasserstoffs, den Druck und Durchfluss der zugeführten Luft, den erzeugten Strom sowie den mit einem Wasserstoffsensor gemessenen Wasserstoffgehalt im Luft-Auslass und steuert einen Stromregler und die Wasserstoff- und Luftzufuhr. In Abhängigkeit von dem Betriebszustand der Brennstoffzelle ist ein gewisser Toleranzbereich für den Wasserstoffgehalt im Sauerstoff-Auslass vorgesehen, innerhalb dessen Druckdifferenz, Durchfluss und Strom geregelt werden.

Der Erfindung liegt die Aufgabe zugrunde, eine mit Wasserstoff und Sauerstoff betriebene Brennstoffzellenanlage mit mehreren Brennstoffzellen und/oder Gruppen von Brennstoffzellen anzugeben, die auch im Falle einer Leckage sicher weiterbetrieben werden kann.

Gemäß der Erfindung wird die Aufgabe durch die in Anspruch 1 definierte Brennstoffzellenanlage gelöst, von der vorteilhafte Weiterbildungen in den Unteransprüchen angegeben sind.

Gegenstand der Erfindung ist somit eine Brennstoffzellenanlage mit mehreren Brennstoffzellenmodulen, die mit den Reaktanden Wasserstoff und Sauerstoff betrieben werden und für jeden der beiden Reaktanden jeweils einen Einlass und einen Auslass aufweisen, über die sie parallel in zwei separate Kreisläufe der beiden Reaktanden geschaltet sind, in die jeweils der betreffende Reaktand über ein Versorgungsventil einleitbar und über ein Entsorgungsventil ausleitbar ist, wobei
die Brennstoffzellenmodule an ihren Einlässen und Auslässen über steuerbare Auf-/Zu-Ventile an den Reaktanden-Kreisläufen angeschlossen sind und
an den Auslässen für zumindest einen der beiden Reaktanden Sensoren zur Detektion des jeweils anderen Reaktanden angeschlossen sind, die bei Detektion eines einen vorgegebenen Schwellenwert überschreitenden Gehalts des jeweils anderen Reaktanden Signale erzeugen, um über die Auf-/Zu-Ventile die Brennstoffzellenmodule, an deren Auslässen die Schwellenwertüberschreitung detektiert wurde, von den beiden Reaktanden-Kreisläufen zu trennen.

Sobald also in einem der Brennstoffzellenmodule ein Leck detektiert wird, wird dieses Modul sowohl einlass- als auch auslassseitig von der Versorgung mit den Reaktanden getrennt, so dass eine Verschleppung des durch das Leck eindringenden fremden Reaktanden in die anderen Brennstoffzellenmodule ausgeschlossen wird. Neben der Unterbindung des chemischen Brennstoffzellenprozesses muss das betroffene Brennstoffzellenmodul auch elektrisch von den übrigen Modulen getrennt werden, soweit diese nicht schon betriebsmäßig über Dioden entkoppelt sind. Die intakten Brennstoffzellenmodule werden weiter aus den Reaktanden-Kreisläufen versorgt, wobei ggf. lediglich eine Leistungsanpassung erforderlich ist. Diese erfolgt aber nicht für jedes einzelne Brennstoffzellenmodul sondern über die Gesamtregelung der Reaktanden-Kreisläufe.

Die Leckageüberwachung kann grundsätzlich auf beiden Seiten der Brennstoffzellenmodule, also für beide Reaktanden erfolgen. Vorzugsweise sind jedoch die Sensoren nur an den Auslässen für einen der beiden Reaktanden angeschlossen, dessen Druck dann durch entsprechende Druckregelung in den Reaktanden-Kreisläufen geringfügig niedriger eingestellt ist als der des anderen Reaktanden.

Da die Viskosität von Sauerstoff größer als die von Wasserstoff ist und daher im Fehlerfall mehr Wasserstoff durch das Leck strömt als Sauerstoff, wird vorzugsweise in dem Sauerstoff-Kreislauf der Druck höher eingestellt als in dem Wasserstoff-Kreislauf und der Wasserstoff-Auslass der Brennstoffzellenmodule auf Vorhandensein von Sauerstoff überwacht.

Die zur Leckageüberwachung dienenden Sensoren sind vorteilhafterweise zwischen den Auslässen der Brennstoffzellenmodule und den Auf-/Zu-Ventilen angeordnet, über die die Auslässe mit den jeweiligen Reaktanden-Kreisläufen verbunden sind. Dadurch wird erreicht, dass im Detektionsfall das betroffene Brennstoffzellenmodul von dem Reaktanden-Kreislauf getrennt werden kann, bevor der fremde Reaktand diesen erreicht. Dies ist insbesondere dann von Vorteil, wenn die Detektion wie z. B. im Falle der zur katalytischen Verbrennung des Wasserstoffs und Detektion der Wärmeentwicklung verzögert erfolgt oder das Brennstoffzellenmodul zunächst einlassseitig und erst mit einer Verzögerung auslassseitig von den Reaktanden-Kreisläufen getrennt wird, damit das dann abgeschaltete Brennstoffzellenmodul drucklos ist. Indem ein ausreichend großes Gasvolumen zwischen dem Ort der Detektion mit dem Sensor und dem Ort der Trennung mit dem Auf-/Zu-Ventil vorgesehen wird, ist eine nahezu beliebige Abschaltverzögerung ohne Gefährdung der anderen Brennstoffzellenmodule möglich.

Die Sensoren können zur zerstörungsfreien Detektion des jeweils anderen Reaktanden ausgebildet sein. Dazu gehören neben optisch arbeitenden Sensoren, welche die Konzentration des zu messenden Reaktanden anhand seiner wellenlängenspezifischen Absorption messen, insbesondere auch Wärmeleitfähigkeitsdetektoren, bei denen der messtechnische Aufwand gering ist und die besonders zur Messung von Zweikomponenten-Gasgemischen geeignet sind.

Da im Leckagefall eine Abschaltung betroffener Brennstoffzellenmodule erst dann erfolgt, wenn die Gaskonzentration des detektierten fremden Reaktanden einen vorgegebenen Schwellenwert überschreitet, können, wenn auch nur geringe, Anteil des fremden Reaktanden in den jeweils zu schützenden Kreislauf gelangen und ggf. über längere Zeit anwachsen, wobei sie nicht mehr ohne Weiteres spezifisch für die fehlerhaften Brennstoffzellenmodule detektierbar sind. Zur Vermeidung dieses Problems ist gemäß einer vorteilhaften Weiterbildung der erfindungsgemäßen Brennstoffzellenanlage in dem Kreislauf des durch die Sensoren überwachten Reaktanden in einem Abschnitt nach dem letzten Auslass und vor dem ersten Einlass eines Brennstoffzellenmoduls eine Einrichtung zur katalytischen Verbrennung des Wasserstoffs angeordnet. Alternativ können die Sensoren an den Brennstoffzellenmodulen selbst zur katalytischen Verbrennung des Wasserstoffs ausgebildet sein, wobei die Anwesenheit des fremden Reaktanden durch Messen der Temperaturerhöhung aufgrund der Verbrennungswärme detektiert wird.

Wie oben bereits erwähnt, werden bei Abschaltung eines fehlerhaften Brennstoffzellenmoduls die intakten Brennstoffzellenmodule weiter aus den Reaktanden-Kreisläufen versorgt, wobei ggf. eine Leistungsanpassung erforderlich ist, die aber nicht individuell für jedes einzelne Brennstoffzellenmodul sondern über die Gesamtregelung der Reaktanden-Kreisläufe erfolgt. Zu diesem Zweck enthalten die Reaktanden-Kreisläufe jeweils eine Zirkulationspumpe mit einer zugeordneten Pumpensteuerung, die Pumpensteuerungen dazu ausgebildet ist, die Leistung der betreffenden Zirkulationspumpe in Abhängigkeit von einer Information über die Anzahl der an die Reaktanden-Kreisläufe geschalteten Brennstoffzellenmodule zu steuern, wobei diese Information in Abhängigkeit von den von den Sensoren erzeugten Signalen aktualisiert wird.

Zur weiteren Erläuterung der Erfindung wird im Folgenden auf die Figuren der Zeichnung Bezug genommen; im Einzelnen zeigen jeweils in schematischer Darstellung:
- Fig. 1: ein erstes Ausführungsbeispiel der erfindungsgemäßen Brennstoffzellenanlage und
- Fig. 2: ein zweites Ausführungsbeispiel der erfindungsgemäßen Brennstoffzellenanlage.

Gleiche Bezugszeichen haben in den verschiedenen Figuren die gleiche Bedeutung.

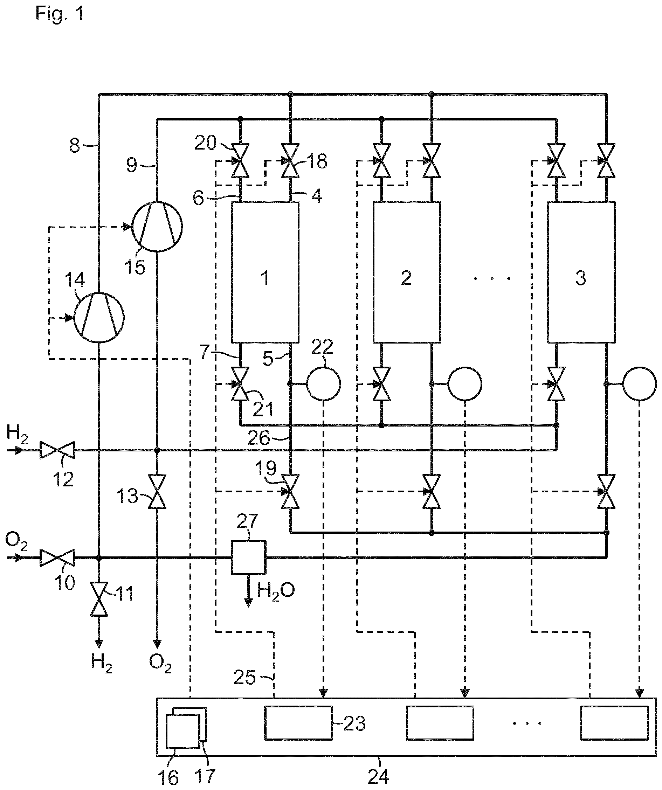

Fig. 1 zeigt Brennstoffzellenanlage mit mehreren Brennstoffzellenmodulen 1, 2, 3 die mit den Reaktanden Wasserstoff H₂ und Sauerstoff O₂ betrieben werden. Wie am Beispiel des Brennstoffzellenmoduls 1 gezeigt, weisen alle Brennstoffzellenmodule 1, 2, 3 für den Reaktanden Wasserstoff einen Einlass 4 und einen Auslass 5 und für den Reaktanden Sauerstoff einen Einlass 6 und einen Auslass 7 auf. Die Brennstoffzellenmodule 1, 2, 3 sind über den Einlass 4 und den Auslass 5 parallel in einen Wasserstoff-Kreislauf 8 und über den Einlass 6 und den Auslass 7 parallel in einen Sauerstoff-Kreislauf 9 geschaltet. Der Wasserstoff kann über ein steuerbares Versorgungsventil 10 in den Kreislauf 8 eingeleitet und über ein Entsorgungsventil 11 aus dem Kreislauf 8 ausgeleitet werden. Entsprechend kann der Sauerstoff über ein steuerbares Versorgungsventil 12 in den Kreislauf 9 eingeleitet und über ein Entsorgungsventil 13 aus diesem ausgeleitet werden. Jeder Reaktanden-Kreislauf 8, 9 enthält eine steuerbare Zirkulationspumpe (Verdichter) 14, 15 zur Förderung des betreffenden Reaktanden durch die parallel geschalteten Brennstoffzellenmodule 1, 2, 3. Den Pumpen 14, 15 zugeordnete Pumpensteuerungen 16, 17 dienen zur Einstellung der Durchflüsse und Drücke in den Reaktanden-Kreisläufen 8, 9. Im Übrigen wird bezüglich des Zirkulationsbetriebs auf die der eingangs erwähnte WO2015024785 (A1) verwiesen, aus der die Versorgung eines Brennstoffzellenstapels mit Reaktanden aus zwei separaten Gaskreisläufen bekannt ist.

Wie wiederum am Beispiel des Brennstoffzellenmoduls 1 gezeigt, ist jedes der Brennstoffzellenmodule 1, 2, 3 an seinen Einlässen 4, 6 und Auslässen 5, 7 über steuerbare Auf-/Zu-Ventile 18, 19, 20, 21 an den jeweiligen Reaktanden-Kreisläufen 8, 9 angeschlossen. Bei dem in Fig. 1 gezeigten Beispiel ist bei jedem der Brennstoffzellenmodule 1, 2, 3 an dem Auslass 5 für den Reaktanden Wasserstoff ein Sensor 22 zur Detektion der Anwesenheit des jeweils anderen Reaktanden, hier Sauerstoff, angeschlossen. Der Sensor 22 selbst oder eine ihm nachgeordnete Auswerteeinrichtung 23, die dem Sensor zugerechnet werden kann und die ebenso wie die Pumpensteuerungen 16, 17 Teil einer übergeordneten Steuerung 24 für die Brennstoffzellenanlage sein kann, erzeugt bei Detektion eines einen vorgegebenen Schwellenwert überschreitenden Sauerstoffgehalts ein Signal 25, um über die Auf-/Zu-Ventile 18, 19, 20, 21 des jeweils betroffenen Brennstoffzellenmoduls, z. B. 1, an dessen Auslass 5 die Schwellenwertüberschreitung detektiert wurde, von den beiden Reaktanden-Kreisläufen 8, 9 zu trennen. Das Signal 25 kann auch dazu genutzt werden, das fehlerhafte Brennstoffzellenmodul 1 über hier nicht gezeigte Schalter elektrisch von den übrigen Modulen 2, 3 bzw. der elektrischen Last zu trennen.

Indem für den Leitungsabschnitt zwischen dem Sensor 22 und dem nachfolgenden Auf-/Zu-Ventil 19 ein ausreichend hohes Gasvolumen 26 vorgesehen ist, ist sichergestellt, dass auch bei verzögert erfolgender Trennung der fremde Reaktand, hier Sauerstoff, nicht in den Wasserstoff-Kreislauf 8 gelangt. Falls dennoch geringe Mengen an Sauerstoff in den Wasserstoff-Kreislauf 8 gelangen, werden sie in einer Einrichtung 27 zur katalytischen Verbrennung des Wasserstoffs vernichtet. Diese Einrichtung 27 ist in einem Abschnitt der Wasserstoff-Kreislaufs 8 angeordnet, der, in Zirkulationsrichtung gesehen, nach dem Auslass 5 des letzten Brennstoffzellenmoduls 3 und vor dem Einlass 4 der ersten Brennstoffzellenmoduls 3 liegt.

Die Pumpensteuerungen 16, 17 enthalten in einem hier nicht gezeigten Speicher Informationen über die Anzahl der an den Reaktanden-Kreisläufen 8, 9 angeschlossenen Brennstoffzellenmodule 1,2, 3, um in Abhängigkeit davon die Pumpenleistung zu steuern. Bei der Erzeugung des Signals 25 zum Schließen der Auf-/Zu-Ventile 18, 19, 20, 21 wird diese Information in dem Speicher aktualisiert, so dass die Pumpenleistung an die geänderten Verhältnisse angepasst wird. Entsprechendes gilt auch für eine hier nicht gezeigte Versorgung der Brennstoffzellenmodule 1, 2, 3 mit Kühlmittel, wobei die Kühlleistung angepasst wird.

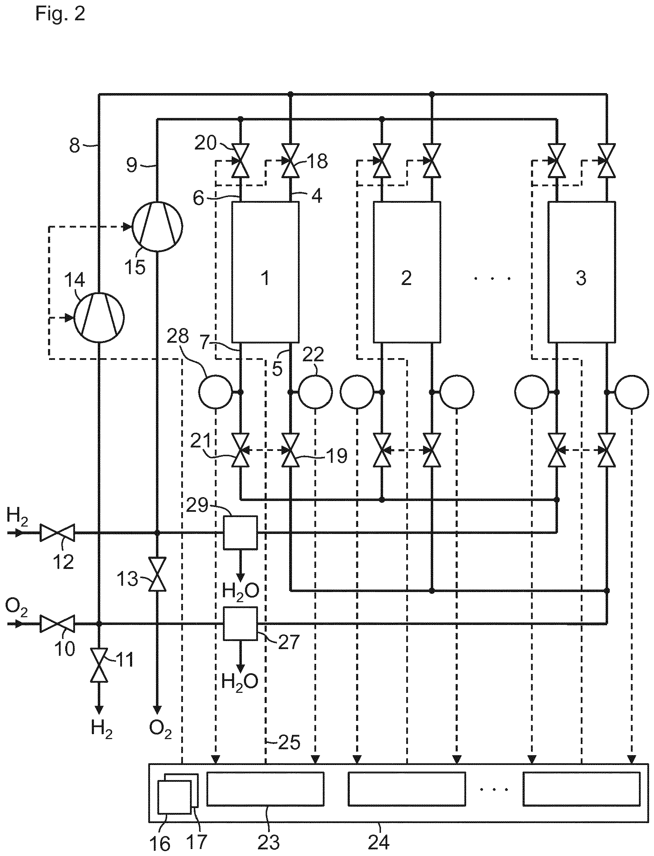

Das in Fig. 2 gezeigte Ausführungsbeispiel der erfindungsgemäßen Brennstoffzellenanlage unterscheidet sich von dem nach Fig. 1 dadurch, dass auch die Sauerstoff-Auslässe 7 mittels weiterer Sensoren 28 auf das Vorhandensein des anderen Reaktanden, hier Wasserstoff, überwacht werden. Wenn einer der Sensoren 22, 28 eine Schwellenwertüberschreitung bei dem jeweils detektierten fremden Reaktanden feststellt, erzeugt die Auswerteeinrichtung 23 das Signal 25 zum Trennen des betroffenen Brennstoffzellenmoduls, z. B. 1, von den Reaktanden-Kreisläufen 8, 9. Soweit die Sensoren 22, 28 über eigene Auswerteeinrichtungen zur Detektion der Schwellenwertüberschreitung verfügen, kann jeder Sensor 22, 28 das Signal 25 selbst erzeugen.

Bei dem gezeigten Ausführungsbeispiel ist eine Einrichtung 29 zur katalytischen Verbrennung von Wasserstoff auch in dem Sauerstoff-Kreislauf 9 vorgesehen. Alternativ können die Sensoren 22, 28 selbst zur katalytischen Verbrennung des Wasserstoffs und Detektion der dabei entstehenden Wärmeentwicklung ausgebildet sein.

## Patentansprüche

1. Brennstoffzellenanlage mit mehreren Brennstoffzellenmodulen (1, 2, 3), die mit den Reaktanden Wasserstoff und Sauerstoff betrieben werden und für jeden der beiden Reaktanden jeweils einen Einlass (4, 6) und einen Auslass (5, 7) aufweisen, über die sie parallel in zwei separate Kreisläufe (8, 9) der beiden Reaktanden geschaltet sind, in die jeweils der betreffende Reaktand über ein Versorgungsventil (10, 12) einleitbar und über ein Entsorgungsventil (11, 13) ausleitbar ist, wobei
die Brennstoffzellenmodule (1, 2, 3) an ihren Einlässen (4, 6) und Auslässen (5, 7) über steuerbare Auf-/Zu-Ventile (18, 19, 21, 22) an den Reaktanden-Kreisläufen (8, 9) angeschlossen sind und
an den Auslässen (5, 7) für zumindest einen der beiden Reaktanden Sensoren (22, 28) zur Detektion des jeweils anderen Reaktanden angeschlossen sind, die bei Detektion eines einen vorgegebenen Schwellenwert überschreitenden Gehalts des jeweils anderen Reaktanden Signale (25) erzeugen, um über die Auf-/Zu-Ventile (18, 19, 21, 2) die Brennstoffzellenmodule (1, 2, 3), an deren Auslässen (5, 7) die Schwellenwertüberschreitung detektiert wurde, von den beiden Reaktanden-Kreisläufen (8, 9) zu trennen.

2. Brennstoffzellenanlage nach Anspruch 1, **dadurch gekennzeichnet, dass** die Sensoren (22) nur an den Auslässen (5) für einen der beiden Reaktanden angeschlossen sind, und der Druck in dem Kreislauf (8) dieses einen Reaktanden geringer als der Druck in dem Kreislauf (9) des anderen Reaktanden ist.

3. Brennstoffzellenanlage nach Anspruch 2, **dadurch gekennzeichnet, dass** der eine Reaktand Wasserstoff und der andere Reaktand Sauerstoff ist.

4. Brennstoffzellenanlage nach einem der vorangehenden Ansprüche, **dadurch gekennzeichnet, dass** die Sensoren (22, 28) zwischen den Auslässen (5, 7) und den diese mit den jeweiligen Reaktanden-Kreisläufen (8, 9) verbindenden Auf-/Zu-Ventilen (19, 21) angeordnet sind.

5. Brennstoffzellenanlage nach Anspruch 4, **dadurch gekennzeichnet, dass** zwischen den Sensoren (22) und den Auf-/Zu-Ventilen (19), welche die von den Sensoren (22) überwachten Auslässen (5) mit dem Reaktanden-Kreislauf (8) verbinden, jeweils ein Gasvolumen (26) vorgegebener Größe vorgesehen ist.

6. Brennstoffzellenanlage nach einem der vorangehenden Ansprüche, **dadurch gekennzeichnet, dass** die Sensoren (22) zur zerstörungsfreien Detektion des jeweils anderen Reaktanden ausgebildet sind.

7. Brennstoffzellenanlage nach Anspruch 6, **dadurch gekennzeichnet, dass** in dem Kreislauf (8, 9) des durch die Sensoren (22, 28) überwachten Reaktanden in einem Abschnitt nach dem letzten Auslass (5, 7) und vor dem ersten Einlass (6, 4) eines Brennstoffzellenmoduls (3 bzw. 1) eine Einrichtung (27, 29) zur katalytischen Verbrennung des Wasserstoffs angeordnet ist.

8. Brennstoffzellenanlage nach einem der Ansprüche 1 bis 5, **dadurch gekennzeichnet, dass** die Sensoren (22, 28) zur katalytischen Verbrennung des Wasserstoffs und Detektion der Wärmeentwicklung ausgebildet sind.

9. Brennstoffzellenanlage nach einem der vorangehenden Ansprüche, **dadurch gekennzeichnet, dass** die Reaktanden-Kreisläufe (8, 9) jeweils eine Zirkulationspumpe (14, 15) mit einer zugeordneten Pumpensteuerung (16, 17) enthalten, dass die Pumpensteuerungen (16, 17) dazu ausgebildet sind, die Leistung der Zirkulationspumpen (14, 15) in Abhängigkeit von einer Information über die Anzahl der aktuell an die Reaktanden-Kreisläufe (8, 9) geschalteten Brennstoffzellenmodule (1, 2, 3) zu steuern und dass diese Information in Abhängigkeit von den von den Sensoren (22, 28) erzeugten Signalen (25) aktualisiert wird.

## Claims

1. Fuel cell system with a number of fuel cell modules (1, 2, 3), which are operated with the reactants hydrogen and oxygen and have an inlet (4, 6) and an outlet (5, 7) for each of the two reactants respectively, by way of which they are switched in parallel in two separate circuits (8, 9) of the two reactants, into which the appropriate reactant can be introduced by way of a supply valve (10, 12) and can be discharged by way of a discharge valve (11, 13) in each case, wherein
the fuel cell modules (1, 2, 3) are connected at their inlets (4, 6) and outlets (5, 7) via controllable on/off valves (18, 19, 21, 22) to the reactant circuits (8, 9) and
sensors (22, 28) for detecting the respective other reactants are connected to the outlets (5, 7) for at least one of the two reactants, said sensors generating signals (25) when a concentration of the respective other reactant, which exceeds a predetermined threshold value, is detected, in order to separate the fuel cell modules (1, 2, 3), at the outlets (5, 7) of which the exceeding of the threshold value was detected, from the two reactant circuits (8, 9) by way of the on/off valves (18, 19, 21, 2).

2. Fuel cell system according to claim 1, **characterised in that** the sensors (22) are only connected to the outlets (5) for one of the two reactants, and the pressure in the circuit (8) of this one reactant is lower than the pressure in the circuit (9) of the other reactant.

3. Fuel cell system according to claim 2, **characterised in that** the one reactant is hydrogen and the other reactant is oxygen.

4. Fuel cell system according to one of the preceding claims, **characterised in that** the sensors (22, 28) are arranged between the outlets (5, 7) and the on/off valves (19, 21) connecting these to the respective reactant circuits (8, 9).

5. Fuel cell system according to claim 4, **characterised in that** a gas volume (26) of a predetermined size is provided between the sensors (22) and the on/off valves (19), which connect the outlets (5) monitored by the sensors (22) to the reactant circuit (8).

6. Fuel cell system according to one of the preceding claims, **characterised in that** the sensors (22) are embodied to detect the respective other reactant without destruction.

7. Fuel cell system according to claim 6, **characterised in that** a device (27, 29) for catalytically combusting the hydrogen is arranged in the circuit (8, 9) of the reactant monitored by the sensors (22, 28) in a section downstream of the last outlet (5, 7) and upstream of the first inlet (6, 4) of a fuel cell module (3 or 1).

8. Fuel cell system according to one of claims 1 to 5, **characterised in that** the sensors (22, 28) are embodied to catalytically combust the hydrogen and to detect the heat development.

9. Fuel cell system according to one of the preceding claims, **characterised in that** the reactant circuits (8, 9) each contain a circulation pump (14, 15) with an assigned pump controller (16, 17), the pump controllers (16, 17) are embodied to control the output of the circulation pumps (14, 15) as a function of an item of information relating to the number of fuel cell modules (1, 2, 3) currently connected to the reactant circuits (8, 9) and this information is updated as a function of the signals (25) generated by the sensors (22, 28).

## Revendications

1. Installation de pile à combustible, comprenant plusieurs modules (1, 2, 3) de pile à combustible, qui fonctionnent avec les réactifs hydrogène et oxygène et qui ont, pour chacun des deux réactifs, respectivement une entrée (4, 6) et une sortie (5, 7) par lesquelles ils sont montés en parallèle en deux circuits (8, 9) distincts des deux réactifs, dans lesquels respectivement le réactif concerné peut être introduit par un robinet (10, 12) d'alimentation et peut être sorti par un robinet (11, 13) d'évacuation, dans laquelle
les modules (1, 2, 3) de pile à combustible sont, sur leurs entrées (4, 6) et leurs sorties (5, 7), raccordés aux circuits (8, 9) de réactif par des robinets (18, 19, 21, 22) ouverts/fermés et
aux sorties (5, 7) d'au moins l'un des deux réactifs sont raccordés des capteurs (22, 28) de détection de l'autre réactif, lesquels, à la détection d'une teneur dépassant une valeur de seuil donnée à l'avance de l'autre réactif, produisent des signaux (25) pour séparer des deux circuits (8, 9) de réactif, par les robinets (18, 19, 21, 22) ouverts/fermés, les modules (1, 2, 3) de pile à combustible, aux sorties (5, 7) desquels le dépassement de la valeur de seuil a été détecté.

2. Installation de pile à combustible suivant la revendication 1, **caractérisée en ce que** les capteurs (22) ne sont raccordés qu'aux sorties (5) de l'un des deux réactifs et le pression dans le circuit (8) de ce un réactif est plus basse que la pression dans le circuit (9) de l'autre réactif.

3. Installation de pile à combustible suivant la revendication 2, **caractérisée en ce que** l'un des réactifs est l'hydrogène et l'autre réactif est l'oxygène.

4. Installation de pile à combustible suivant l'une des revendications précédentes, **caractérisée en ce que** les capteurs (22, 28) sont montés entre les sorties (5, 7) et les robinets (19, 21) ouverts/fermés les reliant aux circuits (9) de réactif respectifs.

5. Installation de pile à combustible suivant la revendication 4, **caractérisée en ce qu'**il est prévu, respectivement, un volume (26) de gaz d'une dimension donnée à l'avance, entre les capteurs (22) et les robinets (19) ouverts/fermés, qui mettent les sorties contrôlées par les capteurs (22) en communication avec les circuits (8) de réactif.

6. Installation de pile à combustible suivant l'une des revendications précédentes, **caractérisée en ce que** les capteurs (22) sont constitués pour détecter, sans destruction, l'autre réactif.

7. Installation de pile à combustible suivant la revendication 6, **caractérisée en ce que**, dans le circuit (8, 9) du réactif contrôlé par les capteurs (22, 28), est monté, dans une partie, après la dernière sortie (5, 7) et avant la première entrée (6, 4) d'un module (3 ou 1) de pile à combustible, un dispositif (27, 29) de combustion catalytique de l'hydrogène.

8. Installation de pile à combustible suivant l'une des revendications 1 à 5, **caractérisée en ce que** les capteurs (22, 28) sont constitués pour la combustion catalytique de l'hydrogène et la détection de la chaleur dégagée.

9. Installation de pile à combustible suivant l'une des revendications précédentes, **caractérisée en ce que** les circuits (8, 9) de réactif comportent chacun une pompe (14, 15) de circulation ayant une commande de pompe (16, 17) associée, **en ce que** les commandes (16, 17) de pompe sont constituées pour commander la puissance des pompes (14, 15) de circulation en fonction d'une information sur le nombre des modules (1, 2, 3) de pile à combustible montés présentement sur les circuits (8, 9) de réactif et **en ce que** cette information est mise à jour en fonction des signaux (25) produits par les capteurs (22, 28).
